Europäisches Patentamt

European Patent Office

Office européen des brevets

(19)

(11) Veröffentlichungsnummer: **0 088 203**
**A1**

(12) **EUROPÄISCHE PATENTANMELDUNG**

(21) Anmeldenummer: **83100034.4**

(22) Anmeldetag: **04.01.83**

(51) Int. Cl.³: **F 16 L 3/08**

(30) Priorität: **05.03.82 DE 3207891**

(43) Veröffentlichungstag der Anmeldung: **14.09.83**
**Patentblatt 83/37**

(84) Benannte Vertragsstaaten: **AT BE CH FR GB IT LI NL SE**

(71) Anmelder: **artur fischer forschung, Weinhalde 14 - 18, D-7244 Waldachtal 3 (Tumlingen) (DE)**

(72) Erfinder: **Fischer, Artur, Dr., Weinhalde 34, D-7244 Tumlingen /Waldachtal 3 (DE)**
Erfinder: **Axt, Dieter, Willy-Königstrasse 37, D-7244 Lützenhardt / Waldachtal 1 (DE)**

(54) **Rohrschelle aus Kunststoff.**

(57) Die Rohrschelle weist eine das Einklipsen der Kabel bzw. Rohrleitungen (5) ermöglichende durch Federschenkel (6) begrenzte Aufnahme (4) auf. Um bei geringen Einklips-kräften hohe Haltekräfte für Kabel und Rohre unterschiedlicher Durchmesser zu erzielen, sind die freien Enden (6a) der Federschenkel in die Aufnahme in der Weise einge-bogen, daß die eingebogenen Enden zur Mittelachse des eingeklipsten Kabels bzw. der Rohrleitung gerichtet sind.

EP 1454

## Rohrschelle aus Kunststoff

Die Erfindung betrifft eine Rohrschelle aus Kunststoff zur Verlegung von elektrischen Kabeln oder Rohrleitungen mit einer das Einklipsen der Kabel bzw. Rohrleitungen ermöglichenden, durch Federschenkel begrenzten Aufnahme.

Derartige einteilige Rohrschellen sind unter dem Begriff Maulschellen bekannt. Die die Aufnahme begrenzenden Federschenkel dieser Maulschellen sind an ihren freien Enden in Anpassung an den Querschnitt des einzulegenden Kabels leicht eingebogen, so daß durch das Obergreifen dieser Enden über das Kabel eine Halterung erreicht wird. Durch die Anpassung dieser Einbiegung an den Querschnitt des Kabels ergeben sich Bedingungen, die eine hohe Kraft zum Einklipsen des Kabels erforderlich machen, ohne daß dadurch höhere Klemm- und Haltekräfte für das in der Schelle eingeklipste Kabel bzw. Rohr erreicht werden. Darüberhinaus können an den relativ dünnwandigen Schenkelenden nur geringe Anlaufschrägen angebracht werden, so daß durch Umknicken der Federschenkel das Einklipsen der Kabel sehr schwert, wenn nicht gar unmöglich wird. Schließlich sind aufgrund dieser ungünstigen Verhältnisse nur ein Durchmesser oder allenfalls nur ein sehr kleiner Durchmesserbereich von Kabeln mit einer Schelle erfaßbar.

Durch zweiteilige Rohrschellen, bei denen Unterteil und Oberteil über Rastzähne miteinander verbindbar sind, können diese Nachteile der einteiligen Maulschellen vermieden werden. Durch die zweiteilige Ausführung sind allerdings die Herstellkosten einerseits sowie die Montagekosten andererseits erheblich höher.

Der Erfindung liegt die Aufgabe zugrunde, eine Rohrschelle zu schaffen, bei der die oben geschilderten Nachteile solcher einteiliger Schellen vermieden sind.

EP 1454

Erfindungsgemäß wird dies dadurch erreicht, daß die freien Enden der Federschenkel in die Aufnahme in der Weise eingebogen sind, daß die eingebogenen Enden zur Mittelachse des eingeklipsten Kabels bzw. der Rohrleitung gerichtet sind.

Durch diese erfindungsgemäße Ausgestaltung wird das eingeklipste Kabel durch die Stirnflächen der freien Enden der Federschenkel gehalten. Da eine Umschließung des Kabels durch die senkrecht stehenden Seitenteile der Federschenkel nicht erforderlich ist, kann somit die Weite der Aufnahme so groß gewählt werden, daß mit einer Schelle ein großer Durchmesserbereich der Kabel bzw. Rohrleitungen abdeckbar ist. Durch die Ausrichtung der freien Enden zur Mittelachse des eingeklipsten Kabels hin wirkt die Auszugsbelastung durch das Gewicht des Kabels bzw. der Rohrleitung in Richtungsachse der freien Enden, so daß nur eine geringe Kraftkomponente für das Aufbiegen der Federschenkel wirksam wird. Dadurch ergeben sich sehr hohe Haltekräfte, die erheblich über den Einklipskräften liegen. Beim Einklipsen werden nämlich die freien Enden einerseits und die senkrecht stehenden Seitenteile der Schenkel andererseits durch die große Weite der Anlaufschräge infolge der Einbiegung der freien Enden ohne größeren Kraftaufwand auseinander gedrückt.

In einer weiteren Ausgestaltung der Erfindung kann die Stirnfläche der eingebogenen Enden rechtwinklig zu deren Richtungsachse stehen. Durch diese Maßnahme ergibt sich eine Linienberührung in der Mitte der Stirnfläche und eine tangentiale Anlage der Stirnflächen der beiden freien Enden auf dem Kabel bzw. Rohr.

In einer weiteren Ergänzung der Erfindung kann an den Innenseiten der die Aufnahme begrenzenden senkrecht stehenden Seitenteile der Federschenkel in die Aufnahme ragende, sich gegenüberstehende Zungen angeordnet sein, die eine elastische Auflage bilden.

EP 1454

Durch diese Zungen wird das eingeklipste Kabel gegen die Stirnflächen der eingebogenen Enden angedrückt. Bei Kabeln mit kleinerem Durchmesser ergibt sich ein geringerer und bei Kabeln mit größerem Durchmesser ein etwas stärkerer Federdruck, so daß unabhängig von der Durchmessergröße des Kabels und unabhängig ob Boden-, Wand- oder Deckenverlegung eine stets gleiche Lageorientierung des Kabels in der Rohrschelle erreicht ist.

In einer weiteren Ausgestaltung der Erfindung kann in ansich bekannter Weise an einer parallel zur Aufnahme verlaufenden Außenfläche der Rohrschelle eine hinterschnittene Leiste und an der gegenüber liegenden Aussenfläche eine hinterschnittene Nut angeordnet sein. Damit können durch Zusammenfügen mehrerer Rohrschellen Schellenreihen gebildet werden, die mit Befestigungselementen an die Wand befestigt werden.

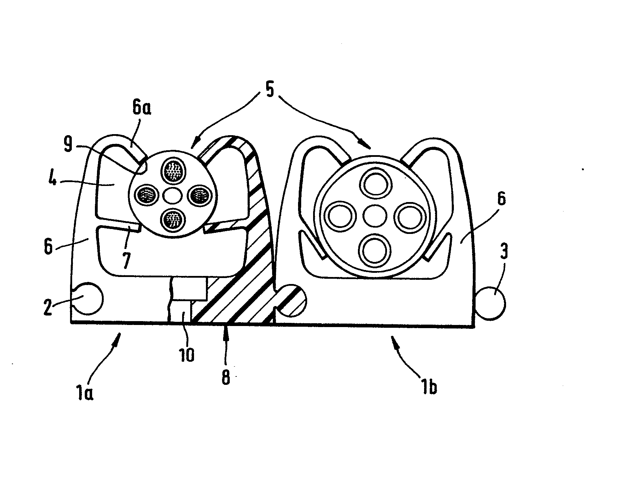

In der Zeichnung ist ein Ausführungsbeispiel der Erfindung dargestellt.

In der Zeichnung sind zwei Rohrschellen 1 a, 1 b über Verbindungsmittel, wie hinterschnittene Nuten 2 und hinterschnittene Leisten 3 zu einer Schellenreihe zusammengesteckt. In die Aufnahme 4 der einzelnen Rohrschellen 1 a , 1 b sind Kabel 5 verschiedenen Durchmessers eingeklipst. Als Auflage für die eingeklipsten Kabel 5 dienen zwei an der Innenseite der die Aufnahme begrenzenden senkrecht stehenden Seitenteile der Federschenkel 6 angeordnete Zungen 7, die in ihrer Ausgangslage etwa parallel zum Schellenboden 8 verlaufen und eine elastische Auflage für das eingeklipste Kabel 5 bilden. Die Zungen 7 drücken das Kabel gegen die Stirnflächen 9 der eingebogenen Enden 6 a der Schenkel 6 an, so daß sowohl bei der Boden- als auch bei der Wand- und Deckenverlegung das Kabel 5 immer in derselben Lage zentriert ist.

EP 1454

Durch die Einbiegung der freien Enden 6 a der Federschenkel 6 in Richtung Mittelachse des eingeklipsten Kabels 5 entsteht zum einen eine günstige Anlaufschräge und zum anderen eine auf Formschluß beruhende Halterung der Kabel. Beim Einklipsen der Kabel 5 werden die freien Enden und die Seitenteile der Federschenkel auseinander gedrückt, so daß ein geringer Kraftaufwand erforderlich ist. Nach dem Zurückfedern der freien Enden wirkt die bspw. durch Gewicht auftretende Auszugsbelastung in Richtungsachse der eingebogenen Enden, so daß nur eine geringe Kraftkomponente zum Aufbiegen der senkrecht stehenden Seitenteile der Schenkel 6 wirksam wird. Damit wird trotz kleiner Einklipskraft eine hohe Haltekraft für das Kabel bzw. die Rohrleitung erreicht. Begünstigt werden diese Bedingungen durch die rechtwinklig zur Richtungsachse der eingebogenen Enden stehenden Stirnflächen. Die Linienabstützung des Kabels erfolgt damit in der Mitte dieser Stirnflächen, so daß eine optimale Krafteinleitung in die freien Enden gewährleistet ist.

Im Rohrschellenboden 8 befindet sich eine Bohrung 10 für die Aufnahme einer Befestigungsschraube, mit der die Rohrschelle auf einer Unterlage befestigt werden kann.

artur fischer forschung

7244 Tumlingen / Waldachtal 3

03. März 1982
Ju/Woe

- 1 -

EP 1454

## P a t e n t a n s p r ü c h e

1. Rohrschelle aus Kunststoff zur Verlegung von elektrischen Kabeln oder Rohrleitungen mit einer das Einklipsen der Kabel bzw. Rohrleitungen ermöglichenden durch Federschenkel begrenzten Aufnahme, dadurch gekennzeichnet, daß die freien Enden der Federschenkel in die Aufnahme in der Weise eingebogen sind, daß die eingebogenen Enden zur Mittelachse des eingeklipsten Kabels bzw. der Rohrleitung gerichtet sind.

2. Rohrschelle nach Anspruch 1, dadurch gekennzeichnet, daß die Stirnfläche der eingebogenen Enden rechtwinklig zur deren Richtungsachse stehen.

3. Rohrschelle nach Anspruch 1, dadurch gekennzeichnet, daß an den Innenseiten der die Aufnahme begrenzenden senkrecht stehenden Seitenteile der Federschenkel in die Aufnahme ragende, sich gegenüberstehende Zungen angeordnet sind, die eine elastische Auflage bilden.

EP 1454

4. Rohrschelle nach Anspruch 1, dadurch gekennzeichnet, daß in ansich bekannter Weise an einer parallel zur Aufnahme verlaufenden Außenfläche der Rohrschelle eine hinterschnittene Leiste und an der gegenüberliegenden Außenfläche eine hinterschnittene Nut angeordnet sind.

1 / 1

0088203

0088203

Europäisches Patentamt

**EUROPÄISCHER RECHERCHENBERICHT**

Nummer der Anmeldung

EP 83 10 0034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-U-8 021 380 (RAYMOND) <br> * Anspruch 1; Figuren 4, 5 * <br><br> --- | 1-3 | F 16 L 3/08 |
| A | DE-U-7 220 306 (FISCHER) <br> * Figur 1 * <br><br> --- | 4 | |
| A | DE-U-7 709 737 (HILTI) <br><br> ----- | | |

| RECHERCHIERTE SACHGEBIETE (Int. Cl. ³) |
|---|
| F 16 L 3/00 |

Der vorliegende Recherchenbericht wurde für alle Patentansprüche erstellt.

| Recherchenort | Abschlußdatum der Recherche | Prüfer |
|---|---|---|
| BERLIN | 27-05-1983 | SCHLABBACH M |